(19) Europäisches Patentamt
European Patent Office
Office européen des brevets

(11) **EP 3 879 255 B1**

(12) **EUROPÄISCHE PATENTSCHRIFT**

(45) Veröffentlichungstag und Bekanntmachung des Hinweises auf die Patenterteilung:
**23.11.2022 Patentblatt 2022/47**

(21) Anmeldenummer: **20161785.9**

(22) Anmeldetag: **09.03.2020**

(51) Internationale Patentklassifikation (IPC):
***G01N 21/03*** *(2006.01)* ***G01N 21/3504*** *(2014.01)*

(52) Gemeinsame Patentklassifikation (CPC):
**G01N 21/0303; G01N 21/3504**

(54) **OPTISCHER GASSENSOR**

OPTICAL GAS SENSOR

CAPTEUR DE GAZ OPTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**15.09.2021 Patentblatt 2021/37**

(73) Patentinhaber: **E+E ELEKTRONIK GES.M.B.H.**
**4209 Engerwitzdorf (AT)**

(72) Erfinder:
• **SIMBRUNNER, Clemens**
**4040 Linz (AT)**

• **RUNCK, Joachim**
**4030 Linz (AT)**
• **HUMER, Markus**
**4020 Linz (AT)**

(74) Vertreter: **Hofmann, Ernst**
**Dr. Johannes Heidenhain GmbH,**
**Patentabteilung,**
**Postfach 12 60**
**83292 Traunreut (DE)**

(56) Entgegenhaltungen:
**US-A1- 2019 145 828 US-B1- 10 168 276**

## Beschreibung

### GEBIET DER TECHNIK

Die vorliegende Erfindung betrifft einen optischen Gassensor.

### STAND DER TECHNIK

Die Detektion von Gasen durch Absorptionsmessungen im mittleren Infrarotbereich mit Hilfe optischer Gassensoren (NDIR-Spektroskopie) ist ein etabliertes Verfahren zur exakten Bestimmung von Gaskonzentrationen, beispielsweise zur Erfassung der Kohlendioxid-Konzentration ($CO_2$) in Luft. Derartige Gassensoren umfassen dabei eine Strahlungsquelle, eine mit Gas gefüllte Messzelle sowie ein oder mehrere Detektoren. Die von der Strahlungsquelle in einem geeigneten Spektralbereich emittierte elektromagnetische Strahlung durchläuft die Messzelle und wird dabei zum Teil vom Gas absorbiert, dessen Konzentration zu messen ist. Der nicht-absorbierte Strahlungsanteil gelangt auf den Detektor, der die einfallende Strahlungsintensität in ein elektrisches Signal umsetzt, das dann in einer Folgeelektronik weiterverarbeitet wird. Auf diese Art und Weise wird demzufolge die Stärke der Absorption der elektromagnetischen Strahlung in der Messzelle messtechnisch erfasst. Sie hängt von der Gaskonzentration und verschiedenen weiteren Einflüssen wie beispielsweise Temperatur, Verschmutzungen etc. ab, die als nicht-gasbedingt bei der Konzentrationsmessung unberücksichtigt bleiben sollen.

Eine möglichst kompakte Bauform stellt eine wichtige Anforderung an derartige Gassensoren dar. Um dies zu gewährleisten wird in der US 8,796,629 B2 eine Lösung vorgeschlagen, bei der im entsprechenden Gassensor eine innere Kavität bzw. ein Lichtkanal in einer zweiteiligen Messzelle aus Kunststoff ausgebildet wird, die auf einem Trägerelement angeordnet ist. Im Lichtkanal sind eine Mehrzahl reflektierender Oberflächen mit einer bestimmten Geometrie vorgesehen, über die die darin eingekoppelte Strahlung einer geeigneten Strahlungsquelle mehrfach umgelenkt wird, bevor diese auf einen Detektor trifft. Eine relativ flache Ausbildung des Gassensors kann auf diese Art und Weise erreicht werden, laut Angaben in der Druckschrift beträgt dessen Höhe ca. 2 - 4mm; in der Praxis besitzt das hierzu korrespondierende Produkt SENSEAIR S8 RESIDENTIAL gemäß den Angaben auf der entsprechenden Webseite (https://senseair.com/products/size-counts/s8-residential/) eine Höhe von 8.7mm. Aufgrund der vorgesehenen Ausbildung des Lichtkanals gelangt jedoch nicht die gesamte emittierte Strahlung auf den Detektor, da ein nicht unerheblicher Teil durch das erforderliche Luftaustauschloch bzw. Gasdurchlassbereich aus der Kavität entweicht; dies hat ein lediglich schwaches Nutzsignal zur Folge.

Ein weiterer optischer Gassensor ist aus der US 2019/0145828 bekannt. Dieser umfasst ein Kammermodul, ein lichtemittierendes Modul und ein optisches Sensormodul. Das Kammermodul weist einen Umlenkbereich mit einer ersten reflektierenden Struktur, einer zweiten reflektierende Struktur und eine dritten reflektierenden Struktur auf. Die erste reflektierende Struktur ist zwischen der zweiten reflektierenden Struktur und der dritten reflektierenden Struktur angeordnet. Das lichtemittierende Modul ist benachbart zum Umlenkbereich platziert und emittiert Strahlung in Richtung des Umlenkbereichs, wo die emittierte Strahlung in Richtung des Kammermoduls umgelenkt wird.

Die US 10,168 276 B1 offenbart einen optischen Gassensor, der benachbart zu einer in einer Messkammer angeordneten Lichtquelle ein Reflektorelement aufweist, welches das darauf einfallende Licht in Richtung der beiden Messkammer-Enden umlenkt. Weitere Details zur Ausbildung des Reflektorelements sind diesem Dokument nicht zu entnehmen.

### ZUSAMMENFASSUNG DER ERFINDUNG

Der vorliegenden Erfindung liegt die Aufgabe zugrunde, einen optischen Gassensor anzugeben, der eine kompakte Bauform besitzt und dabei insbesondere möglichst flach baut; gleichzeitig soll eine maximale Nutzung der von der Strahlungsquelle emittierten Strahlung für die Messung gewährleistet sein.

Diese Aufgabe wird erfindungsgemäß durch einen optischen Gassensor mit den Merkmalen des Anspruchs 1 gelöst.

Vorteilhafte Ausführungen des erfindungsgemäßen Gassensors ergeben sich aus den Maßnahmen, die in den abhängigen Ansprüchen aufgeführt sind.

Der erfindungsgemäße optische Gassensor zur Bestimmung einer Gaskonzentration umfasst eine Messzelle, eine Strahlungsquelle sowie mindestens einen Detektor. Die Messzelle dient zur Aufnahme des Gases und umfasst einen sich entlang einer Längsrichtung erstreckenden Lichtkanal. Die Strahlungsquelle emittiert elektromagnetische Strahlung auf das in der Messzelle befindliche Gas, wobei die Strahlungsquelle in einem Lichteintrittsbereich der Messzelle angeordnet ist und Strahlung in Richtung des Lichtkanals emittiert. Der mindestens eine Detektor dient zur Detektion von zumindest Teilen der elektromagnetischen Strahlung, die das Gas durchlaufen haben, wobei der mindestens eine Detektor in einem Lichtaustrittsbereich angeordnet ist. In der Messzelle ist mindestens ein eintrittsseitiges Umlenkelement angeordnet, welches die darauf einfallende Strahlung sowohl direkt als auch indirekt über eine reflektierende Innenseite der Messzelle entlang der Längsrichtung des Lichtkanals in Richtung des mindestens einen Detektors umlenkt. Das mindestens eine eintrittsseitige Umlenkelement ist pyramidenförmig ausgebildet und an einer Längsseite der Messzelle angeordnet, wobei die Pyramidenspitze in Richtung der Strahlungsquelle orientiert ist. Zusätzlich oder alternativ hierzu ist in der Messzelle mindestens ein austrittsseitiges Umlenkelement angeordnet, welches die entlang der Längsrichtung des Lichtkanals propagierende Strahlung sowohl direkt als auch indirekt über eine reflektierende Innenseite der Messzelle in Richtung des mindestens einen Detektors umlenkt. Das mindestens eine austrittsseitige Umlenkelement ist pyramidenförmig ausgebildet und an einer Längsseite der Messzelle angeordnet, wobei die Pyramidenspitze in Richtung des Detektors orientiert ist.

Besonders vorteilhaft erweist sich, wenn das eintrittsseitige Umlenkelement als dreiseitige Pyramide mit einer dreieckförmigen Pyramiden-Grundfläche ausgebildet ist, wobei

- eine der Pyramiden-Seitenflächen in Richtung der Längsrichtung des Lichtkanals orientiert ist, so dass die darauf einfallende Strahlung eine direkte Umlenkung entlang der Längsrichtung des Lichtkanals in Richtung des mindestens einen Detektors erfährt, und
- die beiden anderen Pyramiden-Seitenflächen derart orientiert sind, dass die darauf einfallende Strahlung dort zunächst eine Umlenkung auf die reflektierende Innenseite der Messzelle erfährt und von der Innenseite der Messzelle dann erst eine weitere Umlenkung entlang der Längsrichtung des Lichtkanals in Richtung des mindestens einen Detektors resultiert.

Dabei kann das eintrittsseitige Umlenkelement als dreiseitige Pyramide mit einer gleichseitigen, dreieckförmigen Pyramiden-Grundfläche ausgebildet sein, wobei die Projektion der aktiven Fläche der Strahlungsquelle in die Pyramiden-Grundfläche passt.

Ferner ist möglich, dass das austrittsseitige Umlenkelement als dreiseitige Pyramide mit einer dreieckförmigen Pyramiden-Grundfläche ausgebildet ist, wobei

- eine der Pyramiden-Seitenflächen in Richtung des mindestens einen Detektors orientiert ist, so dass die darauf einfallende Strahlung eine direkte Umlenkung in Richtung des mindestens einen Detektors erfährt, und
- die beiden anderen Pyramiden-Seitenflächen derart orientiert sind, dass die darauf von der Innenseite der Messzelle her einfallende Strahlung eine Umlenkung in Richtung des mindestens einen Detektors erfährt.

Besonders vorteilhaft erweist sich, wenn die Messzelle zweiteilig ausgebildet ist und ein Messzellen-Unterteil mit einem Lichteintrittsbereich und/oder mindestens einem Lichtaustrittsbereich sowie ein Messzellen-Oberteil mit mindestens einem Umlenkelement umfasst, wobei zwischen dem Messzellen-Oberteil und dem Messzellen-Unterteil der Lichtkanal ausgebildet ist.

Hierbei kann zumindest ein Teil der den Lichtkanal ausbildenden Flächen des Messzellen-Oberteils und des Messzellen-Unterteils jeweils reflektierend für die emittierte Strahlung der Strahlungsquelle ausgebildet sein.

**Fortsetzung: Ursprüngliche Seite 5**

Vorzugsweise ist dabei das Messzellen-Oberteil und das Messzellen-Unterteil aus Glas ausgebildet.

Desweiteren ist möglich, dass im Messzellen-Unterteil eine Öffnung als Teil eines Gasdurchlassbereichs ausgebildet ist.

Mit Vorteil weist die Messzelle desweiteren einen Gasdurchlassbereich auf, wobei über die Ausbildung des Umlenkelements sichergestellt ist, dass nahezu keine Strahlung durch den Gasdurchlassbereich emittiert wird.

Ferner kann vorgesehen sein, dass

- die Strahlungsquelle und der mindestens eine Detektor auf einer gemeinsamen Seite eines Trägerelements angeordnet sind, und
- auf dem Trägerelement oberhalb der Strahlungsquelle und des mindestens eines Detektors über Abstandshalter die Messzelle angeordnet ist.

Hierbei ist möglich, dass auf dem Trägerelement desweiteren mindestens ein elektronisches Signalverarbeitungselement angeordnet ist.

Ferner kann das Trägerelement unterhalb der Öffnung des Messzellen-Unterteils eine Ausnehmung aufweisen, die einen weiteren Teil des Gasdurchlassbereichs bildet, wobei vor der Ausnehmung ein Filterelement angeordnet ist.

Besonders vorteilhaft erweist sich, wenn die Strahlungsquelle und/oder der mindestens eine Detektor jeweils als SMD-Bauelement oder als Bare-Die-Element ausgebildet sind.

Desweiteren erweist sich als Vorteil, wenn der Lichtkanal eine maximale Höhe von 0.5mm aufweist.

Über die erfindungsgemäßen Maßnahmen lässt sich ein besonders flach bauender optischer Gassensor realisieren. Durch das im Lichtkanal vorgesehene Umlenkelement ist ferner eine besonders hohe Lichtausbeute sichergestellt, d.h. nahezu die gesamte von der Strahlungsquelle emittierte Strahlung durchläuft die Messzelle bzw. den Lichtkanal und gelangt auf den Detektor.

Ferner kann der Gasdurchlassbereich im erfindungsgemäßen Gassensor so gewählt werden, dass darüber nahezu keine optischen Verluste in der Messzelle resultieren.

Weitere Vorteile ergeben sich auch unter Fertigungsaspekten; so können automatisiert verarbeitbare Strahlungsquellen und/oder Detektoren verwendet werden, die als SMD- oder Bare-Die-Bauelemente verfügbar sind. Eine besondere Vorbereitung des Trägerelements, wie etwa das Bereitstellen von Ausnehmungen mit einer bestimmten Geometrie für darauf anzuordnende Komponenten, entfällt.

Weitere Einzelheiten und Vorteile der vorliegenden Erfindung seien anhand der nachfolgenden Beschreibung von Ausführungsbeispielen des erfindungsgemäßen optischen Gassensors in Verbindung mit den Figuren erläutert.

## KURZE BESCHREIBUNG DER ZEICHNUNGEN

Es zeigt

Figur 1          eine seitliche Schnittansicht eines ersten Ausführungsbeispiels des erfindungsgemäßen optischen Gassensors;

Figur 2a - 2d    jeweils eine Querschnittsansicht des Gassensors aus Figur 1;

Figur 3          eine seitliche Schnittansicht der Messzelle des Gassensors aus Figur 1;

Figur 4a         eine Ansicht des Messzellen-Unterteils des Gassensors aus Figur 1;

Figur 4b         eine Ansicht des Messzellen-Oberteils des Gassensors aus Figur 1;

Figur 5a         eine Draufsicht auf ein Umlenkelement aus dem Gassensor gemäß Figur 1 in Verbindung mit darüber umgelenkten Strahlenbündeln;

Figur 5b         eine Darstellung zur Erläuterung des Zusammenhangs zwischen Strahlungsquellen-Form und -Größe sowie Umlenkelement-Form und -Größe im Gassensor gemäß Figur 1;

Figur 6          eine seitliche Teil-Schnittansicht eines zweiten Ausführungsbeispiels des erfindungsgemäßen optischen Gassensors;

Figur 7          eine seitliche Teil-Schnittansicht eines dritten Ausführungsbeispiels des erfindungsgemäßen optischen Gassensors;

Figur 8          eine seitliche Schnittansicht eines vierten Ausführungsbeispiels des erfindungsgemäßen optischen Gassensors;

Figur 9          eine seitliche Schnittansicht eines fünften Ausführungsbeispiels des erfindungsgemäßen optischen Gassensors.

## BESCHREIBUNG DER AUSFÜHRUNGSFORMEN

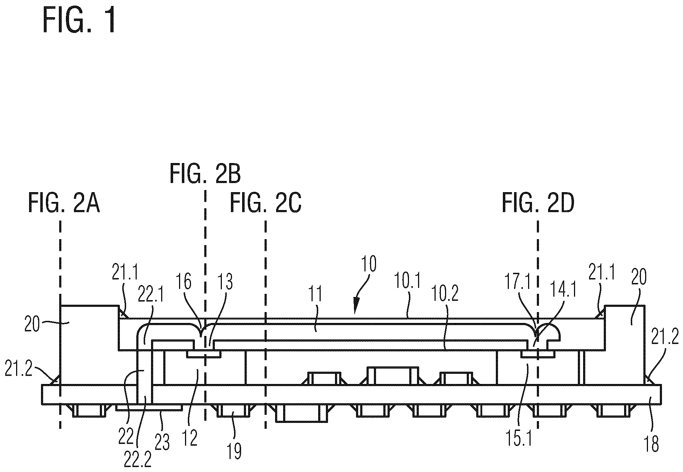

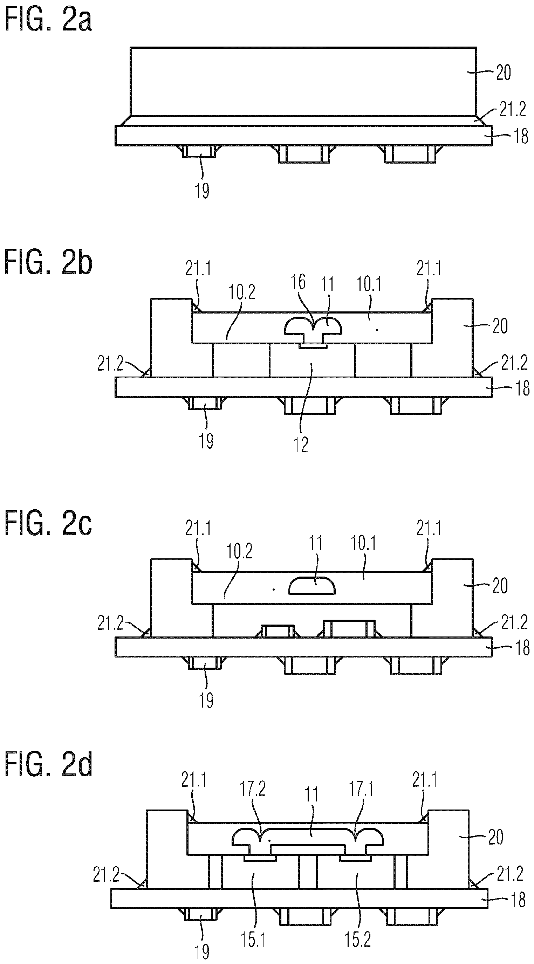

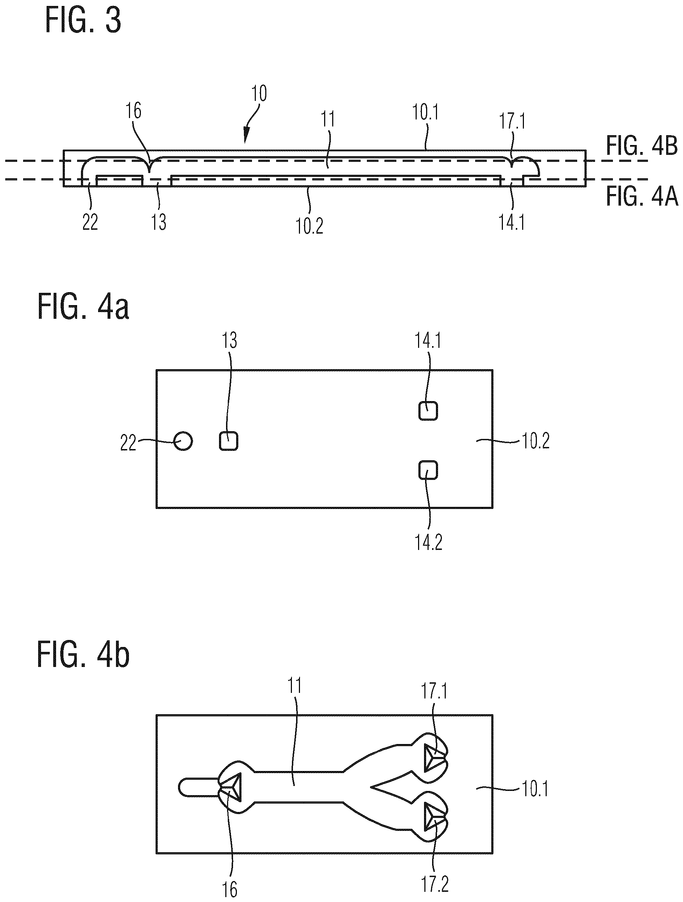

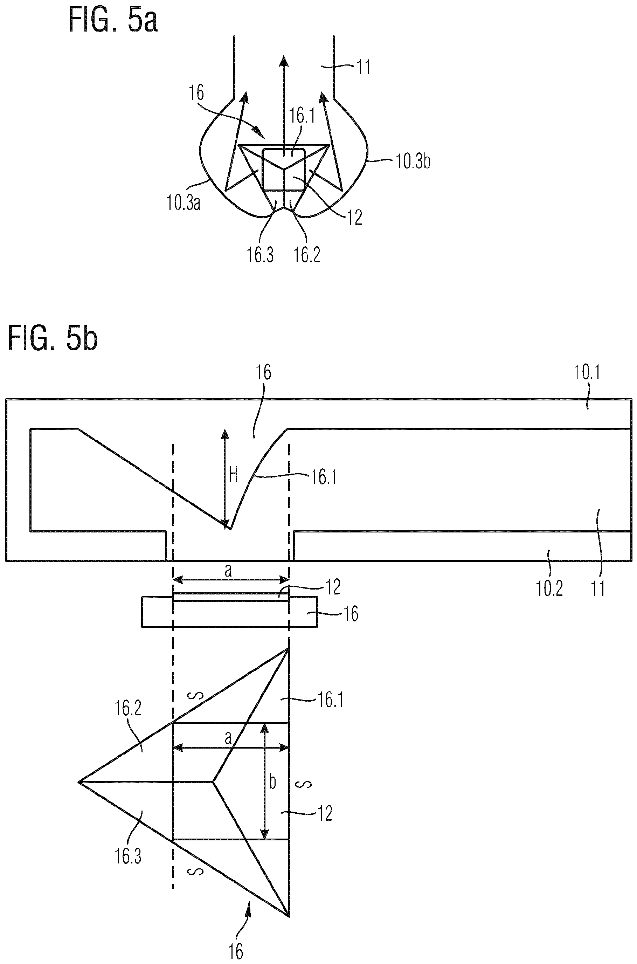

Ein erstes Ausführungsbeispiel des erfindungsgemäßen Gassensors wird nachfolgend anhand der Figuren 1 - 5b beschrieben. Figur 1 zeigt hierbei eine seitliche Schnittansicht, die Figuren 2a - 2d Querschnittsansichten in verschiedenen Schnittebenen, Figur 3 eine seitliche Schnittansicht der Messzelle des Gassensors, die Figuren 4a und 4b Ansichten des Messzellen-Unterteils und des Messzellen-Oberteils sowie die Figuren 5a und 5b Darstellungen zur näheren Erläuterung der Funktionsweise des Umlenkelements.

Der erfindungsgemäße optische Gassensor, der z.B. zur Messung der Konzentration eines Gases nutzbar ist, weist eine Messzelle 10 auf, die einen sich entlang einer Längsrichtung erstreckenden Lichtkanal 11 umfasst bzw. in der ein entsprechender Lichtkanal 11 ausgebildet ist. Die Messzelle 10 ist über Abstandshalter 20 auf einem Trägerelement 18 angeordnet, z.B. einer Leiterplatte. Der Lichtkanal 11 der Messzelle 10 wird hierbei zwischen einem Messzellen-Oberteil 10.1 und einem Messzellen-Unterteil 10.2 der zweiteiligen Messzelle 10 ausgebildet. In einem vorteilhaften Ausführungsbeispiel besitzt der Lichtkanal 11 bei einer Gesamthöhe der Messzelle 10 von etwa 1mm eine Höhe von ca. 0,4mm; die maximale Höhe des Lichtkanals 11 beträgt im erfindungsgemäßen Gassensor bevorzugterweise weniger als 0,5mm. Die Messzelle 10, d.h. das Messzellen-Oberteil 10.1 sowie das Messzellen-Unterteil 10.2 sind vorliegend aus Glas gefertigt, wobei zumindest ein Teil der den Lichtkanal 11 ausbildenden Flächen des Messzellen-Ober- und -Unterteils 10.1, 10.2 jeweils reflektierend für die emittierte Strahlung einer Strahlungsquelle 12 ausgeführt ist. Im vorliegenden Ausführungsbeispiel sind die den Lichtkanal ausbildenden Flächen des Messzellen-Oberteils 101 sowie des Messzellen-Unterteils 10.2 vollständig hochreflektierend ausgebildet. Dies kann z.B. durch eine geeignete hoch-reflektierende Beschichtung in Form einer dünnen Gold-Schicht mit einer Dicke zwischen 100nm und 200nm auf den GlasOberflächen im Lichtkanal 11 realisiert werden, die durch Sputtern, Aufdampfen oder über galvanische Abscheidungsverfahren dort aufgebracht wird.

Das Messzellen-Unterteil 10.2 sowie das Messzellen-Oberteil 10.1 werden im Fall der Verwendung von Glas mit Hilfe eines nasschemischen Ätzverfahrens hergestellt. Hierbei ist jeweils vorgesehen, in einem Standard-Glassubstrat die in diesen Teilen erforderlichen Kanäle, Ausnehmungen etc. mittels Ätzverfahren einzubringen. Nach der entsprechenden Herstellung dieser Teile werden das Messzellen-Oberteil 10.1 und das Messzellen-Unterteil 10.2 über ein geeignetes Klebeverfahren miteinander verbunden, z.B. über ein sogenanntes Adhesive-Bonding-Verfahren.

Sind andere Materialien als Glas vorgesehen, so kann die Fertigung dieser Teile der Messzelle 10 selbstverständlich auch alternativ erfolgen, z.B. durch Fräsen in Metall oder mit Hilfe von Spritzguss-Verfahren im Fall der Verwendung von Kunststoffen.

Der Lichtkanal 11 besitzt einen gemäß Figur 1 links angeordneten Lichteintrittsbereich 13 im Messzellen-Unterteil 10.2, durch den elektromagnetische Strahlung einer Strahlungsquelle 12 in den Lichtkanal 11 eintritt und - in nachfolgend noch näher zu erläuternder Art und Weise - entlang der Längsrichtung des Lichtkanals 11 weiter propagiert, also in Figur 1 nach rechts. Ebenfalls am linken Ende der Messzelle 10 bzw. des Lichtkanals und damit benachbart zum Lichteintrittsbereich 13 ist in Figur 1 ferner ein Gasdurchlassbereich 22 erkennbar. Dieser ist hier als weitere Öffnung 22.1 im Messzellen-Unterteil 10.2 sowie einer Ausnehmung 22.2 im Trägerelement 18 ausgebildet und dient dazu, dass das zu messende Gas in den Lichtkanal 11 gelangt. Vor dem Gasdurchlassbereich 22 bzw. der Ausnehmung 22.2 des Trägerelements 18 ist zudem noch ein Filterelement 23 in Form einer Membran angeordnet. Die Membran ist hierbei für Gase und Feuchtigkeit durchlässig ausgebildet, lässt aber keine Partikel oder Verschmutzungen in die Messzelle 10 bzw. in den darin befindlichen Lichtkanal 11 gelangen. Entsprechende Membranen sind z.B. von der Firma GORE erhältlich.

Am entgegengesetzten Ende weist der Lichtkanal 11 auf der gleichen Messzellen-Seite, an der der Lichteintrittsbereich 13 angeordnet ist, mindestens einen Lichtaustrittsbereich 14.1 auf. Der Lichteintrittsbereich 13 sowie der mindestens eine Lichtaustrittsbereich 14.1 sind hier demnach im Messzellen-Unterteil 10.2 ausgebildet. Durch den Lichtaustrittsbereich 14.1 gelangt die den Lichtkanal 11 verlassende Strahlung, die das Gas im Lichtkanal 11 durchlaufen hat, auf mindestens einen Detektor 15.1. Im dargestellten Ausführungsbeispiel sind zwei Lichtaustrittsbereiche 14.1, 14.2 sowie zwei diesen Lichtaustrittsbereichen 14.1,14.2 zugeordnete Detektoren 15.1, 15.2 vorgesehen; diesbezüglich sei insbesondere auf die Darstellungen in den Figuren 2d sowie 4a, 4b verwiesen.

Über den mindestens einen Detektor 15.1, 15.2 wird der in der Messzelle 10 bzw. im Lichtkanal 11 im durchlaufenen Gas nicht-absorbierte Strahlungsanteil erfasst und in ein elektrisches Signal umgesetzt. Es kann derart somit die Absorption der elektromagnetischen Strahlung in der Messzelle 10 in bekannter Art und Weise erfasst und die Konzentration eines Gases bestimmt werden. Die Verwendung zweier Detektoren 15.1, 15.2 erweist sich insbesondere dann als vorteilhaft, wenn ein zweiter Detektor in üblicher Art und Weise als Referenzdetektor zur Kompensation von Einflüssen wie z.B. Temperatur oder Verschmutzung auf die Absorptionsmessung genutzt wird. Eine Verwendung von zwei oder mehr Detektoren ist für die vorliegende Erfindung jedoch nicht wesentlich; erforderlich ist mindestens ein Lichtaustrittsbereich 14.1 in der Messzelle 10 sowie mindestens ein diesem Lichtaustrittsbereich 14.1 zugeordneter Detektor 15.1 zur Erfassung der Intensität der nicht-absorbierten Strahlung in der Messzelle 10 bzw. im Lichtkanal 11.

Die Strahlungsquelle 12 ist im dargestellten Ausführungsbeispiel unterhalb des Lichteintrittsbereichs 13 im Messzellen-Unterteil 10.2 an einer Längsseite des Messzelle 10 angeordnet; sie emittiert elektromagnetische Strahlung in Richtung des Lichteintrittsbereichs 13 des Lichtkanals 11. Als Strahlungsquelle 12 kann an dieser Stelle beispielsweise eine LED (LED: Light Emitting Diode) oder ein sogenannter MEMS-Strahler (MEMS: Micro Electro Mechanical System) eingesetzt werden. Im Fall der $CO_2$-Konzentrationsmessung emittiert die verwendete Strahlungsquelle 12 elektromagnetische Strahlung im mittleren Infrarot-Bereich, d.h. in einem Wellenlängenbereich zwischen 2000nm und 14000nm. Die Strahlungsquelle 12 ist vorzugsweise in einer besonders flachen Bauform, z.B. als SMD-Bauelement oder als Bare-Die-Bauelement, ausgebildet und wird auf dem Trägerelement 18 unterhalb des Lichtkanals 11 angeordnet. Konkret ist im dargestellten Ausführungsbeispiel ein in Form eines SMD-Bauelements ausgebildeter MEMS-Strahler als Strahlungsquelle 12 vorgesehen, der lediglich eine Bauhöhe von ca. 1mm aufweist. Entsprechende MEMS-Strahler werden z.B. von der Firma AXETRIS AG unter den Typenbezeichnungen EMIRS 200 oder EMIRS 50 angeboten.

Ebenfalls auf dem Trägerelement 18 sind auf der gleichen Seite wie die Strahlungsquelle 12 die beiden Detektoren 15.1, 15.2 angeordnet. Als Detektoren können hierbei sogenannte Thermopiles, Fotodioden oder aber pyroelektrische Detektoren verwendet werden, die im relevanten Wellenlängenbereich, also im Fall der $CO_2$-Konzentrationsmessung zwischen 2000nm und 8000nm, spektral empfindlich sind. Vorzugsweise sind auch die Detektoren 15.1, 15.2 als möglichst flach bauende SMD-Bauelemente oder als Bare-Die-Bauelemente ausgebildet, um sicherzustellen, dass der Gassensor eine möglichst geringe Höhe im Bereich von 1mm besitzt. Als geeignete Detektoren kommen z.B. SMD-Fotodioden in Betracht, die von der Firma ASAHI KASEI MICRODEVICES CORPORATION unter den Typenbezeichnungen AK9710 oder AK1011 vertrieben werden.

Darüber hinaus sind sowohl auf der Oberseite des Trägerelements 18 als auch auf dessen Unterseite im dargestellten Ausführungsbeispiel mehrere Signalverarbeitungselemente 19 angeordnet, über die eine Weiterverarbeitung der an den Detektoren 15.1, 15.2 generierten Signale erfolgt. Desweiteren können diese Signalverarbeitungselemente 19 z.B. zur Regelung der Strahlungsquelle dienen oder aber zur Verarbeitung von weiteren, mittels des Gassensors generierten Messgrößen wie z.B. Druck, Feuchte oder Temperatur dienen. Im Trägerelement 18 sind desweiteren - nicht dargestellte - Leiterbahnen vorgesehen, die die verschiedenen darauf angeordneten Elemente elektrisch miteinander verbinden.

Die Messzelle 10, gebildet aus dem Messzellen-Unterteil 10.2 sowie dem Messzellen-Oberteil 10.1, wird auf dem Trägerelement 18 mit Hilfe geometrisch geeignet ausgebildeter Abstandshalter 20 und Klebeverbindungen 21.1, 21.2 oberhalb der Strahlungsquelle 12, den Detektoren 15.1, 15.2 sowie der Signalverarbeitungselemente 19 auf der Trägerelement-Oberseite angeordnet. Im dargestellten Ausführungsbeispiel liegen das Messzellen-Unterteil 10.2 und das Messzellen-Oberteil 10.1 auf Auflageflächen der Abstandshalter 20 auf und werden mittels Klebeverbindungen 21.1 dort fixiert. Über weitere Klebeverbindungen 21.2 werden die Abstandshalter 20 auf dem Trägerelement 18 fixiert.

Bei einer Dicke des Trägerelements 18 von ca. 1,4mm, einer Bauteilhöhe von ca. 1mm auf der Trägerelement-Unter- und Oberseite sowie einer Höhe der Messzelle von ca. 1mm ergibt sich damit ein äußerst flach bauender Gassensor, der lediglich eine Höhe von ca. 4,5mm aufweist.

Nachfolgend werden nunmehr besondere Aspekte des Strahlengangs im Lichtkanal 11 der Messzelle 10 des erfindungsgemäßen optischen Gassensors erläutert.

Die von der Strahlungsquelle 12 emittierte Strahlung durchtritt zunächst den Lichteintrittsbereich 13 und trifft dann im Lichtkanal 11 auf ein Umlenkelement 16, das auf der dem Lichteintrittsbereich 13 gegenüberliegenden Seite der Messzelle 10 angeordnet ist. Das Umlenkelement 16 ist hierbei derart ausgebildet, dass die darauf einfallende Strahlung sowohl direkt als auch indirekt entlang der Längsrichtung des Lichtkanals 11 in Richtung der Detektoren 15.1, 15.2 umgelenkt wird. Im dargestellten Beispiel resultiert gemäß Figur 1 demzufolge einerseits eine direkte Umlenkung der auf das Umlenkelement 16 einfallenden Strahlung nach rechts entlang der Längsrichtung des Lichtkanals 11 in Richtung der Detektoren 15.1, 15.2. Andererseits resultiert über das Umlenkelement 16 eine Umlenkung der darauf einfallenden Strahlung nach links in Richtung eines Bereichs in der Messzelle 10, von deren reflektierender Innenseite dann eine erneute Umlenkung entlang der Längsrichtung des Lichtkanals 11 in Richtung der Detektoren 15.1, 15.2 erfolgt, also in der Darstellung der Figur 1 nach rechts; dies sei nachfolgend als indirekte Umlenkung der auf das Umlenkelement 16 einfallenden Strahlung verstanden.

Das Umlenkelement 16 ist in diesem Ausführungsbeispiel pyramidenförmig ausgebildet, wobei die Pyramidenspitze in Richtung der Strahlungsquelle 12 bzw. des Lichteintrittsbereichs 13 orientiert ist. Konkret ist eine dreiseitige Pyramide als Umlenkelement 16 vorgesehen, die eine dreieckige Pyramiden-Grundfläche sowie drei Pyramiden-Seitenflächen 16.1 - 16.3 aufweist. Hierbei ist nicht zwingend erforderlich, dass die Pyramiden-Seitenflächen 16.1 - 16.3 jeweils plan ausgebildet sind. So kann aufgrund des gewählten Fertigungsverfahrens eine hiervon abweichende Form der Pyramiden-Seitenflächen 16.1 - 16.3 vorgesehen sein, beispielsweise eine geeignet gekrümmte Form; ebenso ist es möglich, über die Formgebung eine bestimmte Reflexionscharakteristik einzustellen.

Wie in Figur 5a dargestellt, erfolgt im Ausführungsbeispiel über eine erste Pyramiden-Seitenfläche 16.1 die direkte Umlenkung der einfallenden Strahlung entlang der Längsrichtung des Lichtkanals 11 in Richtung der Detektoren 15.1, 15.2. Über die beiden anderen Pyramiden-Seitenflächen 16.2, 16.3 resultiert die erwähnte indirekte Umlenkung, bei der auftreffende Strahlung zunächst auf bestimmte reflektierende Bereiche 10.3a, 10.3b auf der Innenseite der Messzelle 10 umgelenkt und erst von dort dann entlang der Längsrichtung des Lichtkanals 11 in Richtung der Detektoren 15.1, 15.2 umgelenkt wird. Durch eine geeignete Formgebung der Bereiche 10.3a, 10.3b auf der Innenseite der Messzelle 10 kann dabei sichergestellt werden, dass die darauf einfallende Strahlung nahezu vollständig in den Lichtkanal 11 umgelenkt wird und diese für die Gaskonzentrationsmessung verfügbar ist. Ferner kann über die Formgebung dieser Bereiche 10.3a, 10.3b gewährleistet werden, dass nahezu keine Strahlung die Messzelle 10 über den Gasdurchlassbereich 22 verlässt und damit nicht für die Gaskonzentrationsmessung zur Verfügung steht.

Das Umlenkelement 16 ist im dargestellten Ausführungsbeispiel als integraler Bestandteil des Messzellen-Oberteils 10.1 ausgebildet, also im entsprechenden Glas-Bauteil, das reflektierend beschichtet ist. Selbstverständlich handelt es sich hierbei nicht um eine erfindungswesentliche Maßnahme; d.h. es wäre grundsätzlich möglich, ein separates Umlenkelement zu fertigen und dieses dann am Messzellen-Oberteil 10.1 zu befestigen, z.B. durch eine geeignete Klebung.

Eine weitere Dimensionierungsmaßnahme in Bezug auf die geeignete Größe eines pyramidenförmigen Umlenkelements 16 sei anhand der Figuren 5a und 5b erläutert. So ist bei der Auslegung der dreieckförmigen Pyramidengrundfläche darauf zu achten, dass eine Projektion der aktiven Fläche der Strahlungsquelle 12 in die Pyramiden-Grundfläche passt, wie dies in den Figuren 5a, 5b jeweils ersichtlich ist. Im Beispiel der Figuren 5a, 5b ist die Projektion der Strahlungsquelle 12 in die Pyramiden-Grundfläche quadratisch, d.h. das entsprechende Quadrat mit der Seitenlänge a passt hier in die Pyramiden-Grundfläche des Umlenkelements 16. Für das Verhältnis aus der Seitenlänge a der aktiven Fläche der Strahlungsquelle und der Kantenlänge S der Pyramiden-Grundfläche gilt in diesem Fall:

$$\frac{a}{S} = \frac{\sqrt{3}}{\sqrt{3}+2}$$

Selbstverständlich kann im Fall einer anderen Strahlungsquelle die Projektion von deren aktiver Fläche eine andere Form aufweisen, also z.B. kreisförmig sein. Es ist dann analog sicherzustellen, dass der entsprechende Kreis in die Pyramiden-Grundfläche des Umlenkelements 16 passt. Diese Maßnahme gewährleistet, dass der größte Teil der aus der aktiven Fläche der Strahlungsquelle 12 emittierten Strahlung über das Umlenkelement 16 in den Lichtkanal 11 eingekoppelt wird und keine Strahlungsverluste resultieren; eine hohe Signalintensität an den Detektoren 15.1, 15.2 ist damit gewährleistet, da ein großer Teil der verfügbaren Strahlung in Wechselwirkung mit den im Lichtkanal vorhandenen Gasmolekülen tritt.

Neben dem eintrittsseitigen Umlenkelement 16 ist, wie insbesondere aus den Figuren 2d und 4b ersichtlich, im dargestellten Ausführungsbeispiel auch vorgesehen, dass in der Messzelle 10 auf der den Lichtaustrittsbereichen 14.1, 14.2 gegenüberliegenden Seite im Lichtkanal 11 zwei weitere, austrittsseitige Umlenkelemente 17.1, 17.2 angeordnet sind. Diese Umlenkelemente 17.1, 17.2 sind jeweils identisch zum eintrittsseitigen Umlenkelement 16 ausgebildet, d.h. als dreiseitige Pyramide mit dreieckförmiger Pyramiden-Grundfläche, die jeweils integraler Bestandteil des Messzellen-Oberteils 10.1 sind. Über diese Umlenkelemente 17.1, 17.2 erfolgt einerseits eine direkte Umlenkung der darauf einfallenden Strahlung in Richtung der Detektoren 15.1, 15.2. Neben der direkten Umlenkung von Strahlung in Richtung des jeweiligen Detektors 15.1, 15.2, die auf eine der Pyramiden-Seitenflächen auftrifft, resultiert auch eine indirekte Umlenkung von Strahlung, die zunächst ein erstes Mal von der Innenseite der Messzelle 10 in Richtung der weiteren Pyramiden-Seitenflächen reflektiert wird und dann von dort jeweils in Richtung der Detektoren 15.1, 15.2 reflektiert wird. Über die austrittsseitigen Umlenkelemente 17.1, 17.2 wird sichergestellt, dass ein möglichst großer Anteil der Strahlung, die im Lichtkanal das Gas durchlaufen hat, auf die beiden Detektoren 15.1, 15.2 gelangt. Desweiteren erweisen sich austrittsseitige Umlenkelemente als vorteilhaft, wenn auch in diesem Bereich der Messzelle 10 ein Gasdurchlassbereich ausgebildet werden soll; auch hier lassen sich Strahlungsverluste durch ein unkontrolliertes Austreten von Strahlung aus dem Gasdurchlassbereich verringern, wenn über die Umlenkelemente die Strahlung auf den Detektoren konzentriert werden kann.

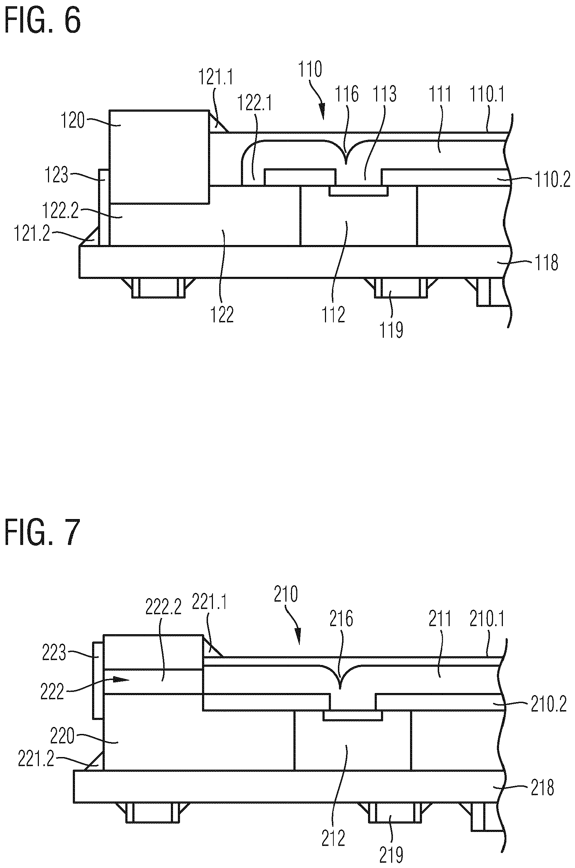

Anhand der seitlichen Teil-Schnittansicht in Figur 6 wird nachfolgend ein zweites Ausführungsbeispiel des erfindungsgemäßen optischen Gassensors beschrieben. Hierbei werden im Anschluss lediglich die maßgeblichen Unterschiede zum ersten Ausführungsbeispiel im Detail erläutert. Diese bestehen vorliegend i.w. in der Ausbildung des Gasdurchlassbereichs 122, der wiederum benachbart zur Strahlungsquelle 112 vorgesehen ist. So umfasst der Gasdurchlassbereich 122 hier neben einer Öffnung 122.1 im Messzellen-Unterteil 110.2 noch eine seitliche Ausnehmung 122.2 im Abstandshalter 120, vor der wiederum ein Filterelement 123 angeordnet wird. Die Ausnehmung 122.2 im Abstandshalter 120 ist hierbei unterhalb der Auflagefläche für das Messzellen-Unterteil 110.2 vorgesehen. In diesem Ausführungsbeispiel ist zur Ausbildung des Gasdurchlassbereichs 122 damit keine Ausnehmung im Trägerelement 118 einzubringen; damit sinkt der Bearbeitungsaufwand, zudem steht mehr Platz auf dem Trägerelement 118 für weitere Signalverarbeitungselemente 119 zur Verfügung.

Ein drittes Ausführungsbeispiel des erfindungsgemäßen optischen Gassensors ist in der seitlichen Teil-Schnittansicht in Figur 7 gezeigt. Auch hier werden im Anschluss lediglich die maßgeblichen Unterschiede zu den vorhergehenden Ausführungsbeispielen erläutert. Diese bestehen wiederum in der Ausbildung und Platzierung des Gasdurchlassbereichs 222, der benachbart zur Strahlungsquelle 212 vorgesehen ist. Der Gasdurchlassbereich 222 umfasst hier zum eine Ausnehmung 222.2 im seitlichen Abstandshalter 220, vor dem ein Filterelement 223 angeordnet ist. Diese Ausnehmung 222.2 ist im Abstandshalter 220 nunmehr jedoch in einer Höhe vorgesehen, dass die Ausnehmung 222.2 zumindest teilweise mit dem Lichtkanal 211 fluchtet, der auch hier zwischen Messzellen-Unterteil 210.2 und dem Messzellen-Oberteil 210.2 ausgebildet ist. Eine separate Öffnung bzw. Ausnehmung für einen Gasdurchlassbereich 222 ist hier demzufolge im Messzellen-Unterteil 210.2 ebenfalls nicht erforderlich; ebenso wie im vorhergehenden Ausführungsbeispiel steht zudem Platz für zusätzliche Signalverarbeitungselemente 219 auf der Oberseite des Trägerelements 218 zur Verfügung.

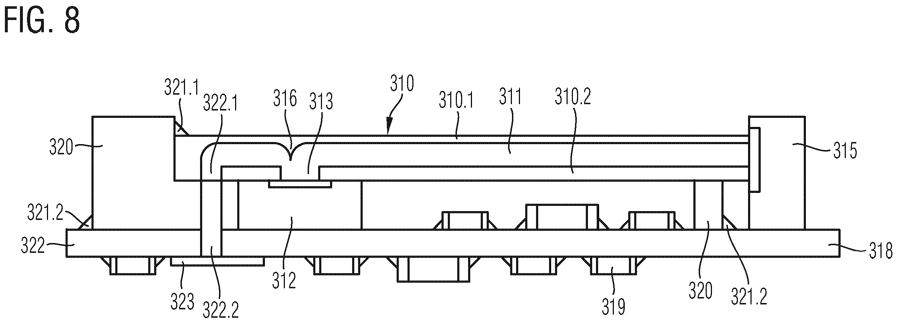

In Figur 8 ist ein viertes Ausführungsbeispiel des erfindungsgemäßen optischen Gassensors in einer seitlichen Schnittansicht dargestellt. Im Unterschied zum ersten Ausführungsbeispiel ist hier im Messzellen-Oberteil 310.1 nunmehr nur ein einkoppelseitiges Umlenkelement 316 gegenüber dem Lichteintrittsbereich 313 im Messzellen-Unterteil 310.2 vorgesehen. Ein auskoppelseitiges Umlenkelement ist in diesem Beispiel nicht erforderlich, da der Lichtaustrittsbereich nicht im Messzellen-Unterteil 310.2 ausgebildet ist, sondern am rechten Ende der Messzelle 310 in Verlängerung des Messkanals 311 zwischen dem Messzellen-Oberteil 310.1 und dem Messzellen-Unterteil 310.2 resultiert. Der Detektor 315 ist wie aus Figur 8 ersichtlich hier nicht wie im ersten Ausführungsbeispiel parallel zum Lichtkanal 311 sondern senkrecht hierzu orientiert angeordnet. Die über das einkoppelseitige Umlenkelement 316 analog zum ersten Ausführungsbeispiel in den Lichtkanal 311 eingekoppelte Strahlung der Strahlungsquelle 312 gelangt hier somit direkt auf den Detektor, ohne dass eine zusätzliche Umlenkung erforderlich ist.

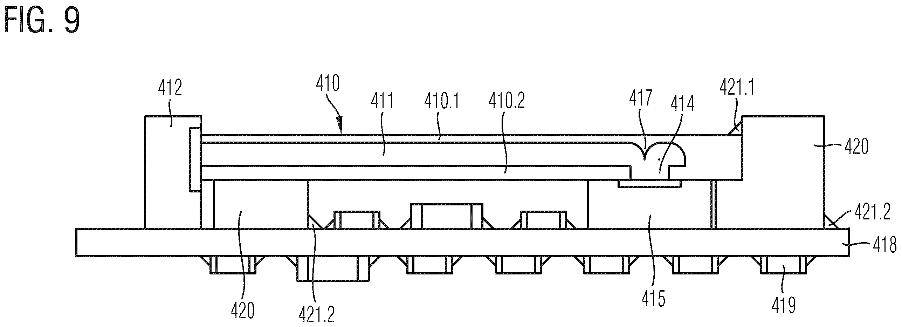

Ein fünftes Ausführungsbeispiel des erfindungsgemäßen optischen Gassensors sei abschließend anhand der Schnittansicht in Figur 9 beschrieben. In diesem Beispiel ist im Unterschied zu den bisher erläuterten Varianten lediglich ein auskoppelseitiges Umlenkelement 417 vorgesehen, dessen Funktion identisch zu den Umlenkelementen des ersten Ausführungsbeispiels ist. Dies bedeutet, dass darüber die durch den Lichtkanal 411 propagierende Strahlung vollständig auf den Detektor 415 umgelenkt wird. Ein einkoppelseitiges Umlenkelement kann hier entfallen, da eine im Unterschied zu den anderen Ausführungsbeispielen alternative Anordnung der Strahlungsquelle 412 relativ zur Messzelle 410 vorgesehen ist. Wie aus Figur 9 ersichtlich, ist die Strahlungsquelle 412 nicht parallel zum Lichtkanal 411 orientiert, sondern senkrecht hierzu am linken Ende der Messzelle 410 unmittelbar benachbart zum Messzellen-Oberteil 410.1 und Messzellen-Unterteil 410.2 angeordnet.

Die von der Strahlungsquelle 412 emittierte Strahlung gelangt hier ohne weitere Umlenkung in die Messzelle 410, da die Strahlungsquelle 412 so angeordnet ist, dass die davon emittierte Strahlung bereits entlang der Längsrichtung des Lichtkanals 411 propagiert. Ein zusätzliches einkoppelseitiges Umlenkelement, das die möglichst vollständige Einkopplung der emittierten Strahlung in den Lichtkanal sicherstellt, ist hier demnach nicht erforderlich.

Neben den vorstehend beschriebenen Ausführungsbeispielen existieren im Rahmen der vorliegenden Erfindung selbstverständlich noch weitere Ausgestaltungsmöglichkeiten.

So kann z.B. das Umlenkelement im Fall einer pyramidenartigen Ausbildung desselbigen nicht nur eine dreieckförmige Pyramiden-Grundfläche aufweisen. Es ist alternativ auch möglich, hier eine rechteckförmige oder aber eine kreisförmige Pyramiden-Grundfläche vorzusehen

Desweiteren wäre anstelle einer pyramidenartigen Ausbildung des Umlenkelements auch eine kreiskegelartige Form des Umlenkelements realisierbar. Eine kreiskegelartige Ausbildung des Umlenkelements sei dabei als Sonderform einer pyramidenartigen Ausbildung mit einer kreisförmigen Grundfläche verstanden. In diesem Fall würde die Kreiskegelspitze in Richtung des Lichteintritts- bzw. Lichtaustrittsbereichs der Messzelle orientiert sein und über die Mantelflächen des Kreiskegels die direkte und indirekte Umlenkung der darauf einfallenden Strahlung resultieren.

Ferner kann der Gasdurchlassbereich der Messzelle nicht nur benachbart zur Strahlungsquelle ausgebildet werden, sondern auch an einer anderen Stelle vorgesehen werden. Beispielsweise können die in den vorstehend erläuterten Beispielen diskutierten Varianten zur Anordnung und Ausbildung des Gasdurchlassbereichs analog auch am entgegengesetzten Ende der Messzelle vorgesehen werden, also benachbart zu dem mindestens einen Detektor.

Desweiteren können auch mehrere Gasdurchlassbereiche in der Messzelle vorgesehen sein, die gemäß den erläuterten Varianten ausgebildet und an verschiedenen Stellen angeordnet sind.

Wie bereits oben angedeutet, kann die Strahlungsquelle ebenso wie der Detektor nicht nur als SMD-Bauelement ausgebildet sein; es ist alternativ auch möglich, als Strahlungsquelle und oder als Detektor ein sogenanntes Bare-Die-Bauelement vorzusehen. Darunter sei ein ungehäustes Bauelement mit der entsprechenden Funktionalität verstanden, das dann z.B. mittels eines Flip-Chip-Bonding-Verfahrens im Lichteintritts- und/oder Lichtaustrittsbereich auf dem entsprechenden Messzellen-Teil angeordnet wird. Eine besonders flache Bauform kann in diesem Fall dann gewährleistet werden, wenn das Messzellen-Teil, auf dem die entsprechenden Bare-Die-Bauelemente angeordnet sind, unmittelbar mit dem Trägerelement verbunden wird; d.h. es wird hier zugunsten einer flachen Bauweise auf Abstandshalter zwischen Messzelle und Trägerelement verzichtet.

## Patentansprüche

1. Optischer Gassensor zur Bestimmung einer Gaskonzentration, mit

   - einer Messzelle zur Aufnahme des Gases, die einen sich entlang einer Längsrichtung erstreckenden Lichtkanal umfasst,
   - einer Strahlungsquelle zum Emittieren von elektromagnetischer Strahlung auf das in der Messzelle befindliche Gas, wobei die Strahlungsquelle in einem Lichteintrittsbereich der Messzelle angeordnet ist und Strahlung in Richtung des Lichtkanals emittiert,
   - mindestens einem Detektor, der zur Detektion von zumindest Teilen der elektromagnetischen Strahlung dient, die das Gas durchlaufen haben, wobei der mindestens eine Detektor in einem Lichtaustrittsbereich angeordnet ist, wobei
   - in der Messzelle (10; 110; 210; 310) mindestens ein eintrittsseitiges Umlenkelement (16; ; 116; 216; 316) angeordnet ist, welches die darauf einfallende Strahlung sowohl direkt als auch indirekt über eine reflektierende Innenseite der Messzelle (10; 110; 210; 310) entlang der Längsrichtung des Lichtkanals (11; 111; 211; 311) in Richtung des mindestens einen Detektors (15.1, 15.2; 315) umlenkt, und das mindestens eine eintrittsseitige Umlenkelement (16; 116; 216; 316) pyramidenförmig ausgebildet und an einer Längsseite der Messzelle (10; 110; 210; 310) angeordnet ist, wobei die Pyramidenspitze in Richtung der Strahlungsquelle (12; 112; 212; 312) orientiert ist,
   und/oder
   - in der Messzelle (10; 410) mindestens ein austrittsseitiges Umlenkelement (17.1, 172; 417) angeordnet ist, welches die entlang der Längsrichtung des Lichtkanals (11; 411) propagierende Strahlung sowohl direkt als auch indirekt über eine reflektierende Innenseite der Messzelle (10; 410) in Richtung des mindestens einen Detektors (15.1, 152; 415) umlenkt, und das mindestens eine austrittsseitige Umlenkelement (17.1, 17.2; 417) pyramidenförmig ausgebildet und an einer Längsseite der Messzelle (10; 410) angeordnet ist, wobei die Pyramidenspitze in Richtung des Detektors (15.1, 15.2; 415) orientiert ist.

2. Optischer Gassensor nach Anspruch 1, wobei das eintrittsseitige Umlenkelement (16; 116; 216; 316) als dreiseitige Pyramide mit einer dreieckförmigen Pyramiden-Grundfläche ausgebildet ist, und

- eine der Pyramiden-Seitenflächen (16.1) in Richtung der Längsrichtung des Lichtkanals (11; 111; 211; 311) orientiert ist, so dass die darauf einfallende Strahlung eine direkte Umlenkung entlang der Längsrichtung des Lichtkanals (11; 111; 211; 311) in Richtung des mindestens einen Detektors (15.1, 152; 315) erfährt, und
- die beiden anderen Pyramiden-Seitenflächen (16.2, 16.3) derart orientiert sind, dass die darauf einfallende Strahlung dort zunächst eine Umlenkung auf die reflektierende Innenseite der Messzelle (10; 110; 210; 310) erfährt und von der Innenseite der Messzelle (10; 110; 210; 310) dann erst eine weitere Umlenkung entlang der Längsrichtung des Lichtkanals (11; 111; 211; 311) in Richtung des mindestens einen Detektors (15.1, 15.2; 315) resultiert.

3. Optischer Gassensor nach Anspruch 1, wobei das eintrittsseitige Umlenkelement (16; 116; 216; 316) als dreiseitige Pyramide mit einer gleichseitigen, dreieckförmigen Pyramiden-Grundfläche ausgebildet ist und die Projektion der aktiven Fläche der Strahlungsquelle (12; 112; 212; 312) in die Pyramiden-Grundfläche passt.

4. Optischer Gassensor nach Anspruch 1, wobei das austrittsseitige Umlenkelement (17.1, 17.2; 417) als dreiseitige Pyramide mit einer dreieckförmigen Pyramiden-Grundfläche ausgebildet ist, und

   - eine der Pyramiden-Seitenflächen in Richtung des mindestens einen Detektors (15.1, 15.2; 415) orientiert ist, so dass die darauf einfallende Strahlung eine direkte Umlenkung in Richtung des mindestens einen Detektors (15.1, 15.2; 415) erfährt, und
   - die beiden anderen Pyramiden-Seitenflächen derart orientiert sind, dass die darauf von der Innenseite der Messzelle (11; 411) her einfallende Strahlung eine Umlenkung in Richtung des mindestens einen Detektors (15.1, 15.2; 415) erfährt.

5. Optischer Gassensor nach mindestens einem der vorhergehenden Ansprüche, wobei die Messzelle (10; 110; 210; 310; 410) zweiteilig ausgebildet ist und ein Messzellen-Unterteil (10.2; 110.2; 210.2; 310.2; 410.2) mit einem Lichteintrittsbereich (13; 113; 213; 313) und/oder mindestens einem Lichtaustrittsbereich (14.1, 14.2; 414) sowie ein Messzellen-Oberteil (10.1; 110.1; 210.1; 310.1; 410.1) mit mindestens einem Umlenkelement (16; 17.1, 17.2; 116; 216; 316; 417) umfasst, wobei zwischen dem Messzellen-Oberteil (10.1; 110.1; 210.1; 310.1; 410.1) und dem Messzellen-Unterteil (10.2; 110.2; 210,2; 310.2; 410.2) der Lichtkanal (11; 111; 211; 311; 411) ausgebildet ist.

6. Optischer Gassensor nach Anspruch 5, wobei zumindest ein Teil der den Lichtkanal (11; 111; 211; 311; 411) ausbildenden Flächen des Messzellen-Oberteils (10.1; 110.1; 210.1; 310.1; 410.1) und des Messzellen-Unterteils (10.2; 110.2; 210.2; 310.2; 410.2) jeweils reflektierend für die emittierte Strahlung der Strahlungsquelle (12; 112; 212; 312; 410) ausgebildet sind.

7. Optischer Gassensor nach Anspruch 5 oder 6, wobei das Messzellen-Oberteil (10.1; 110.1; 210.1; 310.1; 410.1) und das Messzeilen-Unterteil (10.2; 110.2; 210.2; 310.2; 410.2) aus Glas ausgebildet sind.

8. Optischer Gassensor nach Anspruch 5, wobei im Messzellen-Unterteil (10.2; 110.2; 310.2) eine Öffnung (22.1; 122.1; 322.1) als Teil eines Gasdurchlassbereichs (22; 122; 322) ausgebildet ist.

9. Optischer Gassensor nach mindestens einem der Ansprüche 1 - 7, wobei die Messzelle (10; 110; 210; 310) desweiteren einen Gasdurchlassbereich (22; 122; 222; 322) aufweist und über die Ausbildung des Umlenkelements (16; 116; 216; 316) sichergestellt ist, dass nahezu keine Strahlung durch den Gasdurchlassbereich (22; 122; 222; 322) emittiert wird.

10. Optischer Gassensor nach Anspruch 5, wobei

    - die Strahlungsquelle (12; 112; 212) und der mindestens eine Detektor (15.1, 15.2) auf einer gemeinsamen Seite eines Trägerelements (18; 118; 218) angeordnet sind, und
    - auf dem Trägerelement (18; 118; 218) oberhalb der Strahlungsquelle (12; 112; 212) und des mindestens eines Detektors (15.1, 15.2) über Abstandshalter (20; 120; 220) die Messzelle (10; 110; 210) angeordnet ist.

11. Optischer Gassensor nach Anspruch 10, wobei auf dem Trägerelement (18; 118; 218; 318; 418) desweiteren mindestens ein elektronisches Signalverarbeitungselement (19; 119; 219; 319; 419) angeordnet ist.

12. Optischer Gassensor nach Anspruch 8 und 10, wobei das Trägerelement (18; 318) unterhalb der Öffnung (22.1; 322.1) des Messzellen-Unterteils (10.2; 310.2) eine Ausnehmung (22.2; 322.2) aufweist, die einen weiteren Teil des Gasdurchlassbereichs (22; 322) bildet, wobei vor der Ausnehmung (22.2; 322.2) ein Filterelement (23; 323) angeordnet ist.

13. Optischer Gassensor nach Anspruch 10, wobei die Strahlungsquelle (12; 112; 212; 312) und/oder der mindestens eine Detektor (15.1, 15.2; 415) jeweils als SMD-Bauelement oder als Bare-Die-Element ausgebildet sind.

**14.** Optischer Gassensor nach mindestens einem der vorhergehenden Ansprüche, wobei der Lichtkanal (11; 111; 211; 311; 411) eine maximale Höhe von 0.5mm aufweist.

## Claims

**1.** Optical gas sensor for determining a gas concentration, having

- a measurement cell for receiving the gas, which comprises a light channel extending along a longitudinal direction,
- a radiation source for emitting electromagnetic radiation onto the gas located in the measurement cell, wherein the radiation source is arranged in a light entrance region of the measurement cell and emits radiation in the direction of the light channel,
- at least one detector, which serves for detecting at least parts of the electromagnetic radiation that have passed through the gas, wherein the at least one detector is arranged in a light exit region, wherein
- at least one entrance-side deflection element (16; 116; 216; 316) which deflects the radiation that is incident thereon both directly and indirectly via a reflective inner side of the measurement cell (10; 110; 210; 310) along the longitudinal direction of the light channel (11; 111; 211; 311) in the direction of the at least one detector (15.1, 15.2; 315) is arranged in the measurement cell (10; 110; 210; 310) and the at least one entrance-side deflection element (16; 116; 216; 316) is embodied to be shaped like a pyramid and is arranged on a longitudinal side of the measurement cell (10; 110; 210; 310), wherein the tip of the pyramid is oriented in the direction of the radiation source (12; 112; 212; 312),

and/or

- at least one exit-side deflection element (17.1, 17.2; 417) which deflects the radiation propagating along the longitudinal direction of the light channel (11; 411) both directly and indirectly via a reflective inner side of the measurement cell (10; 410) in the direction of the at least one detector (15.1, 15.2; 415) is arranged in the measurement cell (10; 410) and the at least one exit-side deflection element (17.1, 17.2; 417) is embodied to be shaped like a pyramid and is arranged on a longitudinal side of the measurement cell (10; 410), wherein the tip of the pyramid is oriented in the direction of the detector (15.1, 15.2; 415).

**2.** Optical gas sensor according to Claim 1, wherein the entrance-side deflection element (16; 116; 216; 316) is formed like a tetrahedron having a triangular base area, and

- one of the pyramid side faces (16.1) is oriented in the direction of the longitudinal direction of the light channel (11; 111; 211; 311) so that the radiation that is incident thereon undergoes a direct deflection along the longitudinal direction of the light channel (11; 111; 211; 311) in the direction of the at least one detector (15.1, 15.2; 315), and
- the two other pyramid side faces (16.2, 16.3) are oriented such that the radiation that is incident thereon initially undergoes a deflection onto the reflective inner side of the measurement cell (10; 110; 210; 310) and only then a further deflection from the inner side of the measurement cell (10; 110; 210; 310) along the longitudinal direction of the light channel (11; 111; 211; 311) in the direction of the at least one detector (15.1, 15.2; 315) takes place as a result.

**3.** Optical gas sensor according to Claim 1, wherein the entrance-side deflection element (16; 116; 216; 316) is embodied as a tetrahedron having an equilateral, triangular base area and the projection of the active surface of the radiation source (12; 112; 212; 312) fits into the pyramid base area.

**4.** Optical gas sensor according to Claim 1, wherein the exit-side deflection element (17.1, 17.2; 417) is in the form of a tetrahedron having a triangular base area, and

- one of the pyramid side faces is oriented in the direction of the at least one detector (15.1, 15.2; 415) such that the radiation that is incident thereon undergoes a direct deflection in the direction of the at least one detector (15.1, 15.2; 415), and
- the two other pyramid side faces are oriented such that the radiation that is incident thereon from the inner side of the measurement cell (11; 411) undergoes a deflection in the direction of the at least one detector (15.1, 15.2; 415).

**5.** Optical gas sensor according to at least one of the preceding claims, wherein the measurement cell (10; 110; 210; 310; 410) is embodied in two pieces and comprises a measurement cell bottom part (10.2; 110.2; 210.2; 310.2; 410.2) with a light entrance region (13; 113; 213; 313) and/or at least one light exit region (14.1, 14.2; 414) and a measurement cell upper part (10.1; 110.1; 210.1; 310.1; 410.1) with at least one deflection element (16; 17.1, 17.2; 116; 216; 316; 417), wherein the light channel (11; 111; 211; 311; 411) is formed between the measurement cell upper part (10.1; 110.1; 210.1; 310.1; 410.1) and the measurement cell bottom part (10.2; 110.2; 210.2; 310.2; 410.2).

6. Optical gas sensor according to Claim 5, wherein at least some of the faces of the measurement cell upper part (10.1; 110.1; 210.1; 310.1; 410.1) and of the measurement cell bottom part (10.2; 110.2; 210.2; 310.2; 410.2) which form the light channel (11; 111; 211; 311; 411) are each embodied to be reflective for the emitted radiation from the radiation source (12; 112; 212; 312; 410).

7. Optical gas sensor according to Claim 5 or 6, wherein the measurement cell upper part (10.1; 110.1; 210.1; 310.1; 410.1) and the measurement cell bottom part (10.2; 110.2; 210.2; 310.2; 410.2) are made from glass.

8. Optical gas sensor according to Claim 5, wherein an opening (22.1; 122.1; 322.1) is formed in the measurement cell bottom part (10.2; 110.2; 310.2) as part of a gas passage region (22; 122; 322).

9. Optical gas sensor according to at least one of Claims 1-7, wherein the measurement cell (10; 110; 210; 310) furthermore has a gas passage region (22; 122; 222; 322) and it is ensured by the formation of the deflection element (16; 116; 216; 316) that almost no radiation is emitted through the gas passage region (22; 122; 222; 322).

10. Optical gas sensor according to Claim 5, wherein

    - the radiation source (12; 112; 212) and the at least one detector (15.1, 15.2) are arranged on a common side of a carrier element (18; 118; 218), and
    - the measurement cell (10; 110; 210) is arranged by way of spacers (20; 120; 220) on the carrier element (18; 118; 218) above the radiation source (12; 112; 212) and the at least one detector (15.1, 15.2).

11. Optical gas sensor according to Claim 10, wherein furthermore at least one electronic signal processing element (19; 119; 219; 319; 419) is arranged on the carrier element (18; 118; 218; 318; 418).

12. Optical gas sensor according to Claim 8 and 10, wherein the carrier element (18; 318) has, below the opening (22.1; 322.1) of the measurement cell bottom part (10.2; 310.2), a cutout (22.2; 322.2), which forms a further part of the gas passage region (22; 322), wherein a filter element (23; 323) is arranged in front of the cutout (22.2; 322.2).

13. Optical gas sensor according to Claim 10, wherein the radiation source (12; 112; 212; 312) and/or the at least one detector (15.1, 15.2; 415) are embodied each as SMD component or as bare-die element.

14. Optical gas sensor according to at least one of the preceding claims, wherein the light channel (11; 111; 211; 311; 411) has a maximum height of 0.5 mm.

**Revendications**

1. Capteur de gaz optique permettant de déterminer une concentration de gaz, comprenant

    - une cellule de mesure pour recevoir le gaz et qui comprend un canal de lumière s'étendant suivant une direction longitudinale,
    - une source de rayonnement pour émettre un rayonnement électromagnétique sur le gaz se trouvant dans la cellule de mesure, la source de rayonnement étant disposée dans une zone d'entrée de lumière de la cellule de mesure et émettant le rayonnement en direction du canal de lumière,
    - au moins un détecteur qui sert à la détection au moins des parties du rayonnement électromagnétique qui sont passées par le gaz, ledit au moins un détecteur étant disposé dans une zone de sortie de lumière, dans lequel
    - dans la cellule de mesure (10 ; 110 ; 210 ; 310) au moins un élément de déviation côté entrée (16 ; 116 ; 216 ; 316) est disposé qui dévie le rayonnement incident sur celui-ci aussi bien directement qu'indirectement par l'intermédiaire d'une face intérieure réfléchissante de la cellule de mesure (10 ; 110 ; 210 ; 310) suivant la direction longitudinale du canal de lumière (11 ; 111 ; 211 ; 311) en direction du au moins un détecteur (15.1, 15.2 ; 315), et ledit au moins un élément de déviation côté entrée (16 ; 116 ; 216 ; 316) est réalisé en forme de pyramide et est disposé sur un grand côté de la cellule de mesure (10 ; 110 ; 210 ; 310), le sommet de la pyramide étant orienté en direction de la source de rayonnement (12 ; 112 ; 212 ; 312), et/ou
    - dans la cellule de mesure (10 ; 410) au moins un élément de déviation côté sortie (17.1, 17.2 ; 417) est disposé qui dévie le rayonnement qui se propage suivant la direction longitudinale du canal de lumière (11 ; 411) aussi bien directement qu'indirectement par l'intermédiaire d'une face intérieure réfléchissante de la cellule de mesure (10 ; 410) en direction du au moins un détecteur (15.1, 15.2 ; 415), et ledit au moins un élément de déviation côté sortie (17.1, 17.2 ; 417) est réalisé en forme de pyramide et est disposé sur un grand côté de la cellule de mesure (10 ; 410), le sommet de la pyramide étant orienté en direction du détecteur (15.1, 15.2 ; 415).

2. Capteur de gaz optique selon la revendication 1, dans lequel l'élément de déviation côté entrée (16 ; 116 ; 216 ; 316) est réalisé sous la forme d'une pyramide à trois faces avec une surface de base de pyramide triangulaire, et

- l'une des faces latérales de pyramide (16.1) est orientée en direction de la direction longitudinale du canal de lumière (11 ; 111 ; 211 ; 311) de sorte que le rayonnement incident sur celle-ci subit une déviation directe suivant la direction longitudinale du canal de lumière (11 ; 111 ; 211 ; 311) en direction du au moins un détecteur (15.1, 15.2 ; 315), et
- les deux autres faces latérales de pyramide (16.2, 16.3) sont orientées de telle sorte que le rayonnement incident sur celles-ci y subit d'abord une déviation sur la face intérieure réfléchissante de la cellule de mesure (10 ; 110 ; 210 ; 310), et ensuite seulement, partant de la face intérieure de la cellule de mesure (10 ; 110 ; 210 ; 310), une autre déviation résulte suivant la direction longitudinale du canal de lumière (11 ; 111 ; 211 ; 311) en direction du au moins un détecteur (15.1, 15.2 ; 315).

3. Capteur de gaz optique selon la revendication 1, dans lequel l'élément de déviation côté entrée (16 ; 116 ; 216 ; 316) est réalisé sous la forme d'une pyramide à trois faces avec une surface de base de pyramide triangulaire équilatérale, et la projection de la surface active de la source de rayonnement (12 ; 112 ; 212 ; 312) rentre dans la surface de base de pyramide.

4. Capteur de gaz optique selon la revendication 1, dans lequel l'élément de déviation côté sortie (17.1, 17.2 ; 417) est réalisé sous la forme d'une pyramide à trois faces avec une surface de base de pyramide triangulaire, et

- l'une des faces latérales de pyramide est orientée en direction du au moins un détecteur (15.1, 15.2 ; 415) de sorte qu'un rayonnement incident sur celle-ci subit une déviation directe en direction du au moins un détecteur (15.1, 15.2 ; 415), et
- les deux autres faces latérales de pyramide sont orientées de telle sorte que le rayonnement incident sur celles-ci, provenant de la face intérieure de la cellule de mesure (11 ; 411), subit une déviation en direction du au moins un détecteur (15.1, 15.2 ; 415).

5. Capteur de gaz optique selon au moins l'une des revendications précédentes, dans lequel la cellule de mesure (10 ; 110 ; 210 ; 310 ; 410) est réalisée en deux parties, et comprend une partie inférieure de cellule de mesure (10.2 ; 110.2 ; 210.2 ; 310.2 ; 410.2) avec une zone d'entrée de lumière (13 ; 113 ; 213 ; 313) et/ou au moins une zone de sortie de lumière (14.1, 14.2 ; 414), ainsi qu'une partie supérieure de cellule de mesure (10.1 ; 110.1 ; 210.1 ; 310.1 ; 410.1) avec au moins un élément de déviation (16 ; 17.1, 17.2 ; 116 ; 216 ; 316 ; 417), le canal de lumière (11 ; 111 ; 211 ; 311 ; 411) étant réalisé entre la partie supérieure de cellule de mesure (10.1 ; 110.1 ; 210.1 ; 310.1 ; 410.1) et la partie inférieure de cellule de mesure (10.2 ; 110.2 ; 210.2 ; 310.2 ; 410.2).

6. Capteur de gaz optique selon la revendication 5, dans lequel au moins une partie des surfaces réalisant le canal de lumière (11 ; 111 ; 211 ; 311 ; 411) de la partie supérieure de cellule de mesure (10.1 ; 110.1 ; 210.1 ; 310.1 ; 410.1) et de la partie inférieure de cellule de mesure (10.2 ; 110.2 ; 210.2 ; 310.2 ; 410.2) sont respectivement réalisées de manière réfléchissante pour le rayonnement émis de la source de rayonnement (12 ; 112 ; 212 ; 312 ; 410).

7. Capteur de gaz optique selon la revendication 5 ou 6, dans lequel la partie supérieure de cellule de mesure (10.1 ; 110.1 ; 210.1 ; 310.1 ; 410.1) et la partie inférieure de cellule de mesure (10.2 ; 110.2 ; 210.2 ; 310.2 ; 410.2) sont réalisées en verre.

8. Capteur de gaz optique selon la revendication 5, dans lequel une ouverture (22.1 ; 122.1 ; 322.1) est réalisée dans la partie inférieure de cellule de mesure (10.2 ; 110.2 ; 310.2) comme une partie d'une zone de passage de gaz (22 ; 122 ; 322).

9. Capteur de gaz optique selon au moins l'une des revendications 1 à 7, dans lequel la cellule de mesure (10 ; 110 ; 210 ; 310) présente en outre une zone de passage de gaz (22 ; 122 ; 222 ; 322), et la réalisation de l'élément de déviation (16 ; 116 ; 216 ; 316) assure que presque aucun rayonnement ne soit émis par la zone de passage de gaz (22 ; 122 ; 222 ; 322).

10. Capteur de gaz optique selon la revendication 5, dans lequel

- la source de rayonnement (12 ; 112 ; 212) et ledit au moins un détecteur (15.1, 15.2) sont disposés sur une face commune d'un élément de support (18 ; 118 ; 218), et
- sur l'élément de support (18 ; 118 ; 218) au-dessus de la source de rayonnement (12 ; 112 ; 212) et du au moins un détecteur (15.1, 15.2), la cellule de mesure (10 ; 110 ; 210) est disposée par l'intermédiaire d'entretoises (20 ; 120 ; 220).

11. Capteur de gaz optique selon la revendication 10, dans lequel en outre au moins un élément de traitement de signal électronique (19 ; 119 ; 219 ; 319 ; 419) est disposé sur l'élément de support (18 ; 118 ; 218 ; 318 ; 418) .

12. Capteur de gaz optique selon les revendications 8 et 10, dans lequel l'élément de support (18 ; 318) présente au-dessous de l'ouverture (22.1 ; 322.1) de la partie inférieure de cellule de mesure (10.2 ; 310.2) un creux (22.2 ; 322.2) qui constitue une autre partie de la zone de passage de gaz (22 ; 322), un élément filtrant (23 ; 323) étant disposé devant le creux (22.2 ; 322.2).

13. Capteur de gaz optique selon la revendication 10, dans lequel la source de rayonnement (12 ; 112 ; 212 ; 312) et/ou ledit au moins un détecteur (15.1, 15.2 ; 415) sont respectivement réalisés sous la forme d'un composant SMD ou d'un élément à puce nue.

14. Capteur de gaz optique selon au moins l'une des revendications précédentes, dans lequel le canal de lumière (11 ; 111 ; 211 ; 311 ; 411) présente une hauteur maximale de 0,5 mm.

# FIG. 1

FIG. 2a

FIG. 2b

FIG. 2c

FIG. 2d

## FIG. 3

## FIG. 4a

## FIG. 4b

FIG. 5a

FIG. 5b

## FIG. 6

## FIG. 7

FIG. 8

EP 3 879 255 B1

FIG. 9

**IN DER BESCHREIBUNG AUFGEFÜHRTE DOKUMENTE**

**In der Beschreibung aufgeführte Patentdokumente**

- US 8796629 B2
- US 20190145828 A
- US 10168276 B1